# EUROPEAN PATENT APPLICATION

(11) **EP 1 334 923 A1**
(43) Date of publication of application: **13.08.2003**
(21) Application number: 01954471.7
(22) Date of filing: 06.08.2001
(51) Int. Cl.: B65D 85/57

(54) **DISC STORAGE CASE**

(30) Priority: 08.08.2000 JP 2000240508
(71) Applicant: Hasemi, Masateru, Kodaira-shi, Tokyo 187-0044 (JP)
(72) Inventor: Hasemi, Masateru, Kodaira-shi, Tokyo 187-0044 (JP)
(74) Representative: Baronetzky, Klaus, Dipl.-Ing.
(86) International application number: JP0106752
(87) International publication number: WO02012092

(57) **Abstract**

An objet of the present invention is to obtain a disc storage case capable of storing a large number of discs and of reducing a time taken for picking up an intended disc therefrom. In accordance with the present invention, two disc storage cases are coupled to each other via a hinge to be free to open and close, wherein each of the two disc storage cases has a plurality of triangle-shaped partition plates which are displaced and aligned at a predetermined distance, and a top of each of alternate ones of the partition plates is provided with an identification tab extending therefrom. Recognition marks are displayed on the same-directional faces of the identification tabs for making more clear positions of disc storage chambers for convenience of storing discs. A hinge member as a coupler is attached to the two disc chambers for coupling them to each other for providing a connection part thereof with improved strength and durability.

## Description

### Technical Field :

The present invention relates to a disc storage case for storing floppy discs to be used for personal computers and word processors, and also for storing mini discs (MD) to be used for music mini-component stereos.

### Background Art :

Conventional disc storage cases of this type include a storage case with a cover, which has a plurality of disc storage chambers defined by partition plates, and another storage case comprising hinged-double disc storage chambers which store discs alternately to each other and are free to open and close, as described in Japanese laid-open patent publication No. 11-208760. To an import side of each of the disc storage chambers, identification tabs are attached which display informations about contents and types of the storage discs.

The conventional disc storage cases with the partition plates are advantageous in storing a large number of discs in a limited space, but have the following problem. Due to a narrow distance between the disk storage chambers, the identification tabs, which identify the contents stored in the discs, disappear behind the stored discs, so that the identification tabs are not viewable from outside, whereby it takes an unnecessary time for picking up the intended disc. This inconvenience of picking up the discs may be solved by increasing the distance between the disk storage chambers with a reduction in the number of discs which are stored in the limited space.

### Disclosure Of The Invention

In order to overcome the above-described difficulty, a disc storage case in accordance with the present invention is characterized in that two disc storage cases are coupled to each other via a hinge to be free to open and close, wherein each of the two disc storage cases has a plurality of triangle-shaped partition plates which are displaced and aligned at a predetermined distance, and a top of each of alternate ones of the partition plates is provided with an identification tab extending therefrom.

Recognition marks are displayed on the same-directional faces of the identification tabs for making more clear positions of disc storage chambers for convenience of storing the discs.

A hinge member as a coupler is attached to the two disc chambers for coupling them to each other for providing a connection part thereof with improved strength and durability.

### Brief Descriptions Of Drawings

FIG. 1 is a perspective view illustrative of a disc storage case in a closing state in accordance with an embodiment of the present invention.
FIG. 2 is a perspective view illustrative of the disc storage case in an opening state.
FIG. 3 is a plan view showing an arrangement of storage chambers of the disc storage case in the opening state.
FIG. 4 is a view showing a disc-stored state.

### Embodiment

An embodiment of the disc storage case in accordance with the present invention will be described in details with reference to the accompanying drawings.

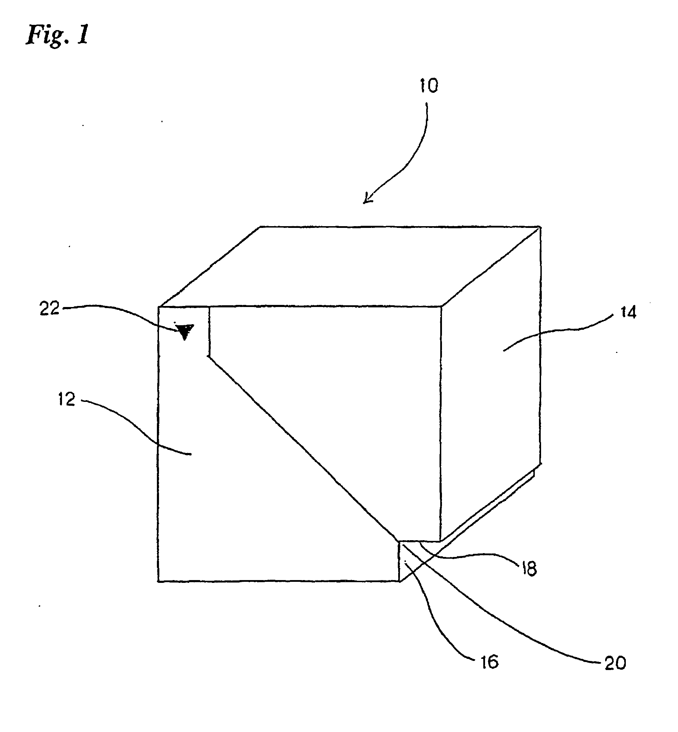

FIG. 1 is a perspective view illustrative of a disc storage case 10 in a closing state in accordance with this embodiment of the present invention.

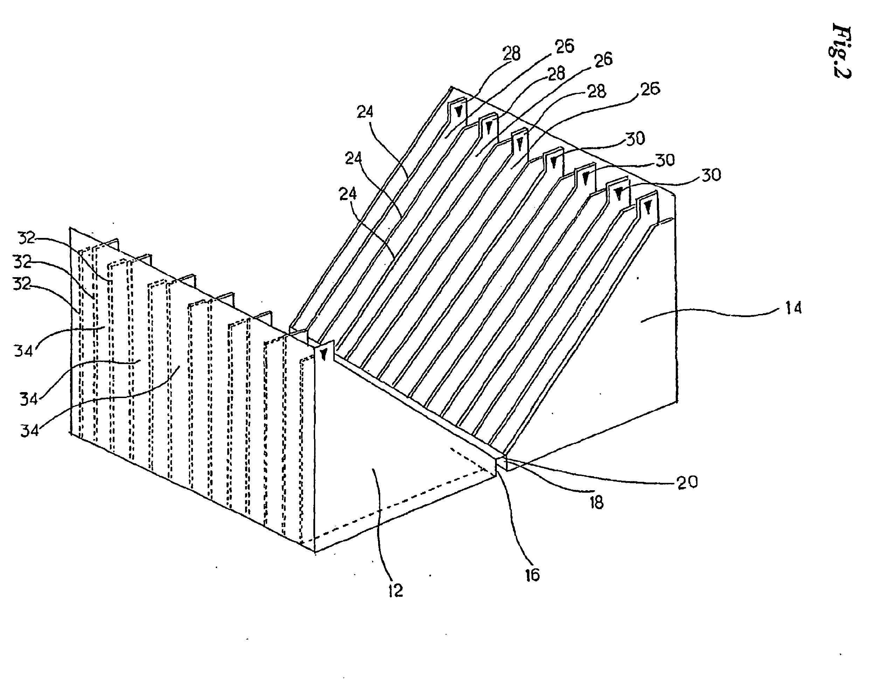

In FIG. 2, the disc storage case 10 is in the opening state. Two cases 12 and 14 generally shaped in triangle are united and coupled to each other through a hinge structure 20 which includes restriction parts 16 and 18, so that the cases 12 and 14 are free to open and close, wherein each of the cases 12 and 14 is provided with a plurality of triangle-shaped partition plates at a predetermined distance.

The cases 12 and 14 have respective sets of the plural triangle-shaped partition plates 24 and 32 which define respective sets of plural disc storage chambers 26 and 34. Tops of alternating ones of each set of the triangle-shaped partition plates 24 and 32 are provided with identification tabs 28 which display recognition marks 22 and 30 respectively which face to a front side of the case or to a direction of alignment of front faces of the stored discs, so as to allow an easy visual confirmation of positions of the stored discs.

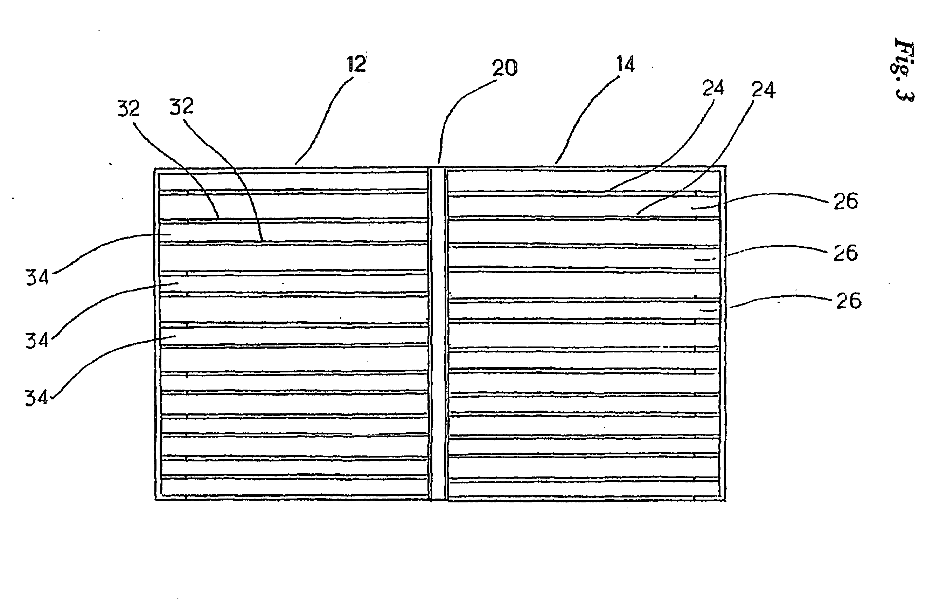

FIG. 3 is a plan view showing an arrangement of storage chambers of the disc storage case in the opening state. The triangle-shaped partition plates 24 and 32 defining the disc storage chambers 26 and 34 of the cases 12 and 14 respectively are provided and displaced in phase from each other so that the cases 12 and 14 can become closed, and the discs stored in the right and left storing chambers respectively can become alternately aligned without any collision between the discs stored in the right and left storing chambers.

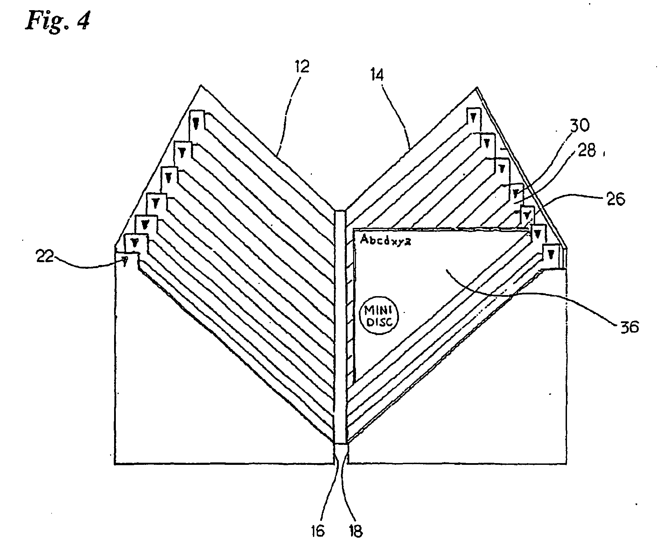

FIG. 4 is a view showing the disc cases 12 and 14 in the opening state, wherein the discs are stored therein. Discs 36 are stored in the disc storage chambers 26 of the case 14, so that the discs 36 are blocked by the restriction part 18 and are made stable without sliding out of the storage chambers 26. The discs 36 are also stored in the disc storage chambers 34 of the opposite case 12, so that the discs 36 are also blocked by the restriction part 16 and are made stable without sliding out of the storage chambers 34. Further, as can be seen from FIG. 4, the identification tabs 28 formed on the tops of the triangle-shaped partition plates 24 are projecting from top edges of the stored discs, so that the recognition marks 22 and 30 are easily viewable. The disc front faces may be matched to the recognition marks, so that the discs are stored in the uniform direction. Further, the presence of the identification tabs make it easy to decide any empty storage chambers. The discs may be stored based on the presence of the identification tabs. It is also possible that any symbols such as characters are displayed on the identification tabs for allocations of the discs to be stored.

### Effect Of The Invention

In accordance with the disc storage case of the present invention, the identification tabs are projecting from the tops of the triangle-shaped partition plates, so that recognition marks displayed on the identification tabs are viewable to align the front faces of the discs in the uniform direction and also allow an easy recognition of any empty disc storage chambers. The identification tabs showing the contents stored in the discs stored in the storage chambers may easily be viewable from the outside, whereby allocation and selective pick-up of the discs are ensured and convenient. Accordingly, a large number of discs can be stored with a reduction in time necessary for picking up the intended disc.

## Claims

1. A disc storage case **characterized in that** two disc storage cases are coupled to each other via a hinge to be free to open and close, wherein each of the two disc storage cases has a plurality of triangle-shaped partition plates which are displaced and aligned at a predetermined distance, and a top of each of alternate ones of the partition plates is provided with an identification tab extending therefrom.

2. The disc storage case as claimed in claim 1, wherein recognition marks are displayed on uniform directional faces of the identification tabs.

3. The disc storage case as claimed in claim 1 or 2, wherein a hinge member as a coupler-hinge is attached to the two disc chambers for coupling them to each other.
